# EUROPEAN PATENT APPLICATION

(11) **EP 2 101 205 A1**
(43) Date of publication of application: **16.09.2009**
(21) Application number: 09153585.6
(22) Date of filing: 25.02.2009
(51) Int. Cl.: G02B 6/44, G02B 6/02

(54) **Fibre optic cable and method for its installation**

(30) Priority: 13.03.2008 IT MI20080421
(71) Applicant: Tratos Cavi S.p.A., 52036 Pieve S. Stefano AR (IT)
(72) Inventor: Venturi, Piergiorgio, 52036, PIEVE S. STEFANO (AR) (IT)
(74) Representative: Ripamonti, Enrico

(57) **Abstract**

The fibre optic cable (1) comprises a plurality of cores (2), each of which comprises an optical fibre (3) provided with a primary protection layer (4). The cores (2) are all contained in an outer containing and protection sheath (8). Each of the cores (2) presents a mechanical protection and reinforcement layer (5) superposed on the primary protection layer (4).

The method for installing a fibre optic cable (1) consists of laying the cable (1), forming at least one incision in an outer containing and protection sheath (8) of the cable (1), withdrawing from the incision at least one core (2) forming part of the cable (1), and installing the core (2).

## Description

The present invention relates to a fibre optic cable and a method for its installation.

There is a known market requirement for cables able to transport data and information in increasingly greater quantities with ever increasing quality.

To transport large quantities of data, fibre optic cables are currently used which are able to contain a large number (tens or hundreds) of optical fibres within cables of small diameter (a few millimetres).

Each optical fibre within these traditional cables presents a primary protection layer.

All the optical fibres together with their primary protection layer are then grouped spirally twisted or mutually parallel and inserted, embedded, within a synthetic gel, in an outer containing and protection sheath.

Notoriously, when these cables are installed, numerous branches have to be formed in order to couple the optical fibres of the cable to the constituent optical fibres of the apartment or office system to which they are to be connected.

The branches are made by forming apertures in the outer containing and protection sheath to enable one or more fibres to be extracted.

The extracted fibres are connected to optical joints and connectors for connection to the apartment or office system.

However the systems made with traditional cables are very costly as the optical joints and connectors are themselves costly, and moreover have to be installed by highly specialized personnel.

In addition, the presence of the optical joints and connectors necessarily induces losses and hence attenuation of the transported signals.

The technical aim of the present invention is therefore to provide a cable and method by which the stated technical drawbacks of the known art are eliminated.

Within the scope of this technical aim, an object of the invention is to provide a cable and method by which fibre optic systems can be formed economically.

Another object of the invention is to provide a cable and method enabling systems to be formed which, during operation, result in very small losses and signal attenuation compared with systems formed by traditional cables and methods.

The technical aim, together with these and other objects, are attained according to the present invention by a fibre optic cable and a method for its installation in accordance with the accompanying claims.

Advantageously, the cable of the invention is of self-supporting type and is of very small dimensions and mass. It enables a fibre or groups of optical fibres of considerable length to be branched (i.e. extracted from the outer containing and protection sheath) at any required spacing; this operation is achieved by break-out (extraction from the outer containing and protection sheath) without having to interrupt the optical circuits.

Further characteristics and advantages of the invention will be more apparent from the description of a preferred but non-exclusive embodiment of the cable and method according to the invention, illustrated by way of non-limiting example in the accompanying drawings, in which:

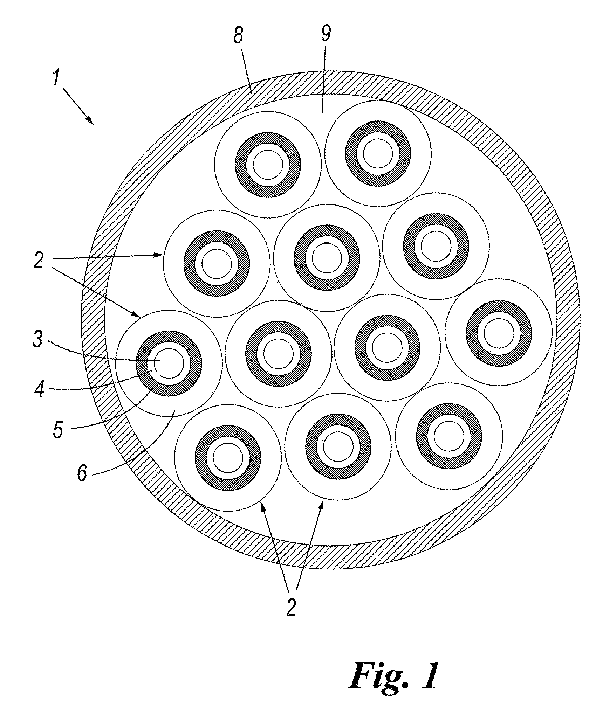

Figure 1 is a section through a cable according to the invention;

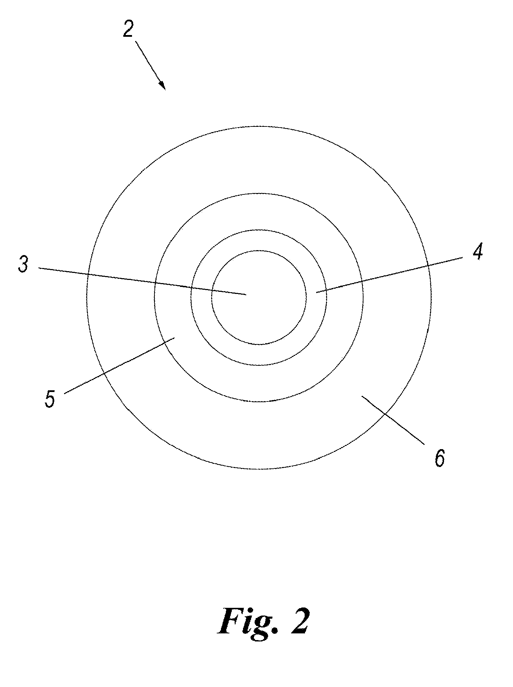

Figure 2 is a section through an individual core forming part of the cable of Figure 1.

With reference to said figures, these show a fibre optic cable, indicated overall by the reference numeral 1.

The cable 1 comprises a plurality of cores 2, each comprising an optical fibre 3 provided with a primary protection layer 4; this structure (optical fibre plus primary protection) has a diameter of about 0.25 mm.

Each of the cores 2 presents a mechanical protection and reinforcement layer 5, superposed on the primary protection layer 4.

The mechanical protection and reinforcement layer 5 is formed by means of a longitudinal reinforcement in the form of a thread of composite filaments such as aramid fibres (Kevlar) and/or other fibres of high mechanical strength (glass fibre threads and or carbon fibre threads and/or boric fibre threads).

In addition, each core 2 comprises a cover sheath 6 superposed on the protection and reinforcement layer 5; this cover sheath 6 is of reduced thickness, and formed of low friction coefficient nylon, such as to contain within the limit of 0.75 mm the outer diameter of the structure composed of: optical fibre, primary protection, protection and reinforcement layer, and cover sheath. The cores 2 are all contained within an outer containing and protection sheath made of nylon.

Hence because of their structure, each core 2 presents high mechanical strength.

Advantageously, the cores 2 are all disposed mutually parallel (i.e. they are not spirally twisted); this facilitates break-out of the cores 2 (i.e. extraction of the cores 2 from the outer sheath 8) when these are installed.

A currently very important problem to be solved is the transport of multiple optical signals within cables of very small dimensions and mass, with high mechanical strength and low friction coefficient, in order to be able to insert the cable through small-diameter tubes containing other types of cables (energy transmission cables, copper telephone cables, coaxial cables).

The cable of the invention is of self-supporting multiple type and contains, depending on requirements, from 6 to 60 or more single optical fibre cores of various types, monomodal and multimodal.

By virtue of the protection and reinforcement layer 5 and the cover sheath 6, each core can withstand a force of 300 N and can hence be used for cabling purposes in considerable lengths, either individually or in groups, with break-out (extraction from the outer sheath 8 of the cable 1) at any required spacing, while maintaining continuity of the optical circuit, as far as the final user without the need for junctions (optical joints or connectors) at the break-out point.

Each core 2 presents mechanical characteristics enabling it to be handled without problems of breakage by tractive forces or bending.

Five different cables were constructed in accordance with the invention, the data measured for each of said cables being given below.

### DIMENSIONS

The cable dimensions were very small, for example:
- a cable with 4 cores (optical fibres) presents an outer diameter of 3.50 mm;
- a cable with 12 cores (optical fibres) presents an outer diameter of 4.8 mm;
- a cable with 24 cores (optical fibres) presents an outer diameter of 7.00 mm;
- a cable with 36 cores (optical fibres) presents an outer diameter of 7.50 mm;
- a cable with 60 cores (optical fibres) presents an outer diameter of 9.00 mm;

### TENSILE STRENGTH

Both the individual cores and the overall cables were shown to possess considerable tensile strength, for example:
- strength of a single core (monofibre), 30 DaN;
- strength of a 12 core cable (12 fibres), 300 DaN;
- strength of a 24 core cable (24 fibres), 500 DaN;
- strength of a 36 core cable (36 fibres), 700 DaN;
- strength of a 60 core cable (60 fibres), 1000 DaN;

### FRICTION

The cables have shown to possess an extremely low friction coefficient by virtue of the nylon sheaths.

This characteristic is very important for insertion through tubes with tortuous paths and already clogged with other types of cables, such as those normally found in buildings.

### BRANCHING BY "BREAK-OUT"

This characteristic enables one or more cores (defining a reinforced mono-fibre optic cable) to be very easily branched from the multiple cable at required spacing (for example at each individual floor of the building). These cores can be extracted in considerable lengths (more than 20 metres) from the cable outer sheath 8.

This enables the connection to be made between the main socket of the apartment or any specific room and the signal source, without interrupting fibre optic continuity at the branches by cuts followed by connections, with consequent signal attenuation.

### INDIVIDUAL CORE MANAGEABILITY

The cores (individual or in groups) branching from the cable outer sheath 8 by extraction have considerable manageability by virtue of their very small outer dimensions, their considerable tensile strength (exceeding 300 N) and their good bendability because of the presence of the nylon sheath 6.

### OPTICAL FIBRES USED

The cores 2 of the present invention can be formed from all types of optical fibres, and in particular from monomodal fibres (satisfying ITU-T G652, G655, G656 and G657) and/or multimodal fibres (satisfying ITU-T G651) and/or special plastic/glass and plastic-plastic fibres.

The present invention also relates to a method for installing a fibre optic cable. The method consists of laying the cable, forming at least one incision in the outer containing sheath 8 of the cable 1, withdrawing from the incision at least one core forming part of the cable 1, and installing said core 2.

It has been found in practice that the cable and method of the invention are particularly advantageous as each core defines a highly manageable sub-cable presenting high resistance to bending. This core or "sub-cable" can be extracted from the cable by break-out for even very large lengths (for example 20 metres or more) and can be installed without the need for optical joints or connectors.

In practice the materials used, and the dimensions, can be chosen according to requirements and to the state of the art.

## Claims

1. A fibre optic cable (1) comprising a plurality of cores (2), each comprising an optical fibre (3) provided with a primary protection layer (4), said cores (2) being all contained in an outer containing and protection sheath (8), **characterised in that** each of said cores (2) presents a mechanical protection and reinforcement layer (5) superposed on the primary protection layer (4).

2. A cable (1) as claimed in claim 1, **characterised in that** said mechanical protection and reinforcement layer (5) which wraps the primary protection layer (4) is formed by means of a reinforcement in the form of a thread of composite filaments.

3. A cable (1) as claimed in one or more of the preceding claims, **characterised in that** said composite filaments forming said mechanical protection and reinforcement layer (5) are filaments of aramid fibres and/or glass fibres and/or or carbon fibres and/or boric fibres.

4. A cable (1) as claimed in one or more of the preceding claims, **characterised in that** each core comprises a cover sheath (6) superposed on said protection and reinforcement layer (5).

5. A cable (1) as claimed in one or more of the preceding claims, **characterised in that** said cover sheath (6) for the protection and reinforcement layer (5) is formed of nylon.

6. A cable (1) as claimed in one or more of the preceding claims, **characterised in that** said cores (2) are mutually parallel within said outer containing and protection sheath (8).

7. A cable (1) as claimed in one or more of the preceding claims, **characterised in that** said outer containing and protection sheath (8) is formed of nylon.

8. A cable (1) as claimed in one or more of the preceding claims, **characterised in that** the structure composed of: optical fibre, primary protection, protection and reinforcement layer, and cover sheath, has an outer diameter contained within the limit of 0.75 mm.

9. A cable (1) as claimed in one or more of the preceding claims, **characterised in that** said optical fibres are monomodal fibres and/or multimodal fibres and/or special plastic/glass and/or plastic-plastic fibres.

10. A method for installing a fibre optic cable (1), consisting of laying the cable (1), forming at least one incision in an outer containing and protection sheath (8) of said cable (1), withdrawing from the incision at least one core (2) forming part of the cable (1), and installing said core (2).
